# EUROPEAN PATENT APPLICATION

(11) **EP 2 450 318 A2**
(43) Date of publication of application: **09.05.2012**
(21) Application number: 11008815.0
(22) Date of filing: 07.11.2011
(51) Int. Cl.: C03B 13/04, C03B 25/08, C03B 32/02

(54) **Method and apparatus of continuously forming crystallized glass**

(30) Priority: 08.11.2010 JP 2010250133
(71) Applicant: Huzhou Ta Hsiang Glass Products Co., LTD, Huzhou Zhejiang (CN); Ta Hsiang Containers IND.CO., LTD, Hsin Pu Town Hsin chu 305 (TW)
(72) Inventor: Hsu, Kuo-Chuan, Hsin Pu Town Hsin chu County 305 (TW); Jiang, Yanbin, Huzhou, Zhejiang (CN)
(74) Representative: Schöllhorn, Andreas

(57) **Abstract**

One objective of the present invention was to provide a method of continuously forming crystallized glass, so as to reduce the thermal treatment time necessary for crystallizing a belt-shaped glass plate; and to provide an apparatus of continuously forming crystallized glass, so as to shorten the thermal treatment zone necessary for crystallizing a belt-shaped glass plate. A method of continuously forming crystallized glass according to the present invention includes: a melting step of melting a raw glass material to obtain molten glass; a shaping step of rolling the molten glass to form a belt-shaped glass plate; a crystallizing step of retaining the belt-shaped glass plate at a temperature necessary for nuclei formation and crystal growth, thereby forming nuclei and crystallizing the belt-shaped glass plate to a belt-shaped crystallized glass plate, and then slowly cooling the belt-shaped crystallized glass plate; and a cutting step of cutting the belt-shaped crystallized glass plate.

## Description

### BACKGROUND OF THE INVENTION

This application claims priority from Japanese Patent Application No. 2010-250133 filed on 2010/11/8, the contents of which are hereby incorporated by reference in their entirety for all purposes.

### A. Field of the Invention

The present invention is related to a method of continuously forming crystallized glass and an apparatus of continuously forming crystallized glass.

### B. Description of the Prior Art

Generally, crystallized glass is obtained by melting a raw glass material containing nuclei-forming ingredients, shaping the molten glass into a crystallizable glass plate, and applying a crystallization thermal treatment on the crystallizable glass plate. So far, the development pertaining to manufacturing methods and apparatuses of crystallized glass have been continuously pursued in order to increase the throughput of crystallized glass. For instance, the reference 1 has disclosed an apparatus of continuously forming crystallized glass, which performs the melting, shaping, crystallizing, annealing and finally the cutting steps on raw glass materials in a continuous order.

In a manufacturing method of crystallized glass which performs the melting, shaping, crystallizing, annealing and finally the cutting steps on raw glass materials in a continuous order, the crystallizing step becomes the rate control step. In an apparatus of continuously forming crystallized glass, the length of the crystallization device (roller-hearth kiln) is designed to be 250-300 m to ensure that the thermal treatment time for crystallization is sufficient. Moreover, the multi-stage heat treatment is needed in the crystallization thermal treatment, and the temperature distribution inside the crystallization device is divided into multi-staged zones. Specifically, the crystallization thermal treatment is required to be divided into a first thermal treatment step of forming nuclei and a second thermal treatment step of growing crystals. Furthermore, the first thermal treatment step includes placing crystallizable glass in a furnace with a lower temperature, and then increasing the temperature to a temperature sufficient for nuclei formation. Additionally, since the thermal treatment temperature of the second thermal treatment step is higher than that of the first thermal treatment step, a step of increasing temperature is required between the first and the second thermal treatment steps.

For instance, in the manufacturing apparatus disclosed in the reference 1, the temperature distribution inside a crystallization device is designed based on the aforementioned thoughts. Specifically, in the manufacturing apparatus disclosed in the reference 1, the crystallization device includes a temperature-holding zone used for retaining a belt-shaped glass plate at a temperature around the glass transition temperature; a first temperature-raising zone used for raising the temperature of the belt-shaped glass plate to a nuclei-forming temperature; a nuclei-forming zone used for retaining the belt-shaped glass plate at the nuclei-forming temperature; a second temperature-raising zone used for raising the temperature of the belt-shaped glass plate to a crystal-growth temperature; a crystal-growth zone used for retaining the belt-shaped glass plate at the crystal-growth temperature; and an annealing zone used for eliminating the deformation of the belt-shaped crystallized glass plate.

Reference 1: Japanese Patent Application No. 2005-41726.

### SUMMARY OF THE INVENTION

### Problems to be Solved by the Invention

In a method of continuously forming crystallized glass, if the crystallization thermal treatment step is improved, the thermal treatment time necessary for crystallization may be reduced and the throughput may be increased. One objective of the present invention is to provide a method of continuously forming crystallized glass to reduce the thermal treatment time necessary for crystallizing a belt-shaped glass plate. Furthermore, another objective of the present invention is to provide an apparatus of continuously forming crystallized glass to shorten the thermal treatment zone necessary for crystallizing a belt-shaped glass plate.

### Means to Solve the Problems

It has been found by the inventor that the crystallizable glass may also be crystallized by directly placing it in a furnace with a higher temperature, at or around the conventional crystal-growth temperature; and a single thermal treatment may be applied to achieve both of nuclei formation and crystal growth, thereby accomplishing the present invention. The specific mechanisms necessary for solving the aforementioned problems are described as follows:

(1) A method of continuously forming crystallized glass includes:
a melting step of melting a raw glass material to obtain molten glass;
a shaping step of rolling the molten glass to form a belt-shaped glass plate;
a crystallizing step of retaining the belt-shaped glass plate at a temperature necessary for nuclei formation and crystal growth, thereby forming nuclei and crystallizing the belt-shaped glass plate to a belt-shaped crystallized glass plate, and then slowly cooling the belt-shaped crystallized glass plate; and
a cutting step of cutting the belt-shaped crystallized glass plate.

(2) The method recited in the above item (1) further includes:
an adjusting step of adjusting the homogeneity, viscosity and liquid level of the molten glass obtained from the melting step; and
a devitrification-preventing step of preventing the molten glass subjected to the adjusting step from devitrifying.

(3) An apparatus of continuously forming crystallized glass includes:
a melting device used for melting a raw glass material;
a shaping device used for rolling the molten glass obtained from the melting device to form a belt-shaped glass plate;
a crystallization device used for crystallizing the belt-shaped glass plate, wherein the crystallization device comprising:
a temperature-holding zone used for retaining the belt-shaped glass plate obtained from the shaping device at a temperature necessary for nuclei formation and crystal growth, thereby forming nuclei and crystallizing the belt-shaped glass plate to a belt-shaped crystallized glass plate; and
a slow-cooling zone, configured in the rear of the temperature-holding zone, used for slowly cooling the belt-shaped crystallized glass plate; and
a cutting device used for cutting the belt-shaped crystallized glass plate obtained from the crystallization device.

(4) The apparatus recited in the above item (3) further includes:
an adjusting device, coupled to the melting device, used for adjusting the homogeneity, viscosity and liquid level of the molten glass obtained from the melting device; and
a devitrification-preventing device, coupled to the adjusting device, used for preventing the molten glass flowing out of the adjusting device from devitrifying.

### Effect of the invention

According to the present invention, a method of continuously forming crystallized glass capable of reducing the thermal treatment time necessary for crystallizing a belt-shaped glass plate is provided. Furthermore, according to the present invention, an apparatus of continuously forming crystallized glass capable of shortening the thermal treatment zone necessary for crystallizing a belt-shaped glass plate is provided.

### BRIEF DESCRIPTION OF THE DRAWINGS

Fig. 1 shows a schematic view of one embodiment of an apparatus of continuously forming crystallized glass according to the present invention.

Figs. 2A and 2B respectively show a graph illustrating the temperature gradient inside a crystallization device in one embodiment of an apparatus of continuously forming crystallized glass according to the present invention.

### DETAILED DESCRIPTION OF THE PREFERRED EMBODIMENTS

### Method of continuously forming crystallized glass

The first aspect of the present invention is to provide a method of continuously forming crystallized glass, including:
a melting step of melting a raw glass material to obtain molten glass;
a shaping step of rolling the molten glass to form a belt-shaped glass plate;
a crystallizing step of retaining the belt-shaped glass plate at a temperature necessary for nuclei formation and crystal growth, thereby forming nuclei and crystallizing the belt-shaped glass plate to a belt-shaped crystallized glass plate, and then slowly cooling the belt-shaped crystallized glass plate; and

a cutting step of cutting the belt-shaped crystallized glass plate. The method of continuously forming crystallized glass according to the present invention may melt, shape, crystallize, anneal and finally cut the raw glass material in a continuous order by sequentially comprising the melting, shaping, crystallizing and cutting steps.

The melting step heats a raw glass material to obtain molten glass. The heating temperature is not specifically limited as long as it is sufficient to melt the raw glass material. The melting step may further include mixing the raw glass material prior to melting it. In view of the operatability, a preferable embodiment is to continuously mix the raw glass material until it is melted. The shaping step rolls the molten glass to form a belt-shaped glass plate. The shape-rolling method may be a conventional method, such as a roller-shaping method using a pair of rollers to press the molten glass. The crystallizing step crystallizes the belt-shaped glass plate to form a belt-shaped crystallized glass plate. The details concerning the crystallizing step will be described below. The cutting step cuts the belt-shaped crystallized glass plate into a predetermined length. The cutting method may be a conventional method, such as a cutting method using a diamond cutter or a water jet cutting method.

In the method of continuously forming crystallized glass according to the present invention, the crystallizing step retains the belt-shaped glass plate at a temperature necessary for nuclei formation and crystal growth, thereby forming nuclei and crystallizing the belt-shaped glass plate to a belt-shaped crystallized glass plate (referred to as "temperature-holding step"), and then slowly cools the belt-shaped crystallized glass plate (referred to as "slow-cooling step"). The crystallizing step includes the temperature-holding step and the slow-cooling step, and produces the belt-shaped crystallized glass plate from the belt-shaped glass plate.

The temperature-holding step retains the surrounding environment of the belt-shaped glass plate within a predetermined temperature range enabling the nuclei formation and crystal growth (preferably, a nearly constant temperature). It is supposed that both of nuclei formation and crystal growth may occur simultaneously within the belt-shaped glass plate in the temperature-holding step. The present invention shortens the thermal treatment time necessary for crystallizing the belt-shaped glass plate by modifying the thermal treatment necessary for crystallization into the temperature-holding step. Furthermore, since the thermal treatment time necessary for crystallizing the belt-shaped glass plate is shortened, the overall time necessary for continuously forming the crystallized glass may be shortened accordingly. B esides, the time spent on the slow-cooling step may be increased without extending the overall treatment time for the crystallizing step. If more time is spent on the slow-cooling step, the temperature gradient of the slow-cooling step would be smaller, or the temperature gradient may be divided into multiple stages. Therefore, advantages of the present invention include effectively eliminating the deformation of the belt-shaped crystallized glass plate obtained from crystallization, and obtaining crystallized glass with higher strength.

The present invention may prevent ripples, deformations, breaks and cracks from occurring in the belt-shaped crystallized glass plate by modifying the thermal treatment necessary for crystallization into the temperature-holding step. As for the mechanism, it is supposed as follows, though it is not limited to a specific theory. The crystallizable glass swells during the process of heating, and shrinks in the course of nuclei formation and crystal growth. Therefore, when a heating zone, a temperature-holding zone necessary for nuclei formation, a heating zone for the next stage, and a temperature-holding zone necessary for crystal growth are placed sequentially in a crystallization device, the swelling portion and the shrinking portion of the belt-shaped glass plate passing through the crystallization device would be adjacent and alternately occur. As to a piece of continuous belt-shaped glass plate, in a case that the thermal treatment time necessary for crystallization cannot be fully ensured, adjacent and alternately occurring swelling and shrinking portions may cause ripples, deformations, breaks and cracks to occur in the belt-shaped crystallized glass plate. In the present invention, the thermal treatment step necessary for crystallization is the temperature-holding step, while the surrounding temperature of the belt-shaped glass plate is retained within a predetermined temperature range. In other words, the nuclei formation and crystal growth may occur simultaneously; therefore, it is supposed that in a piece of continuous belt-shaped glass plate, the swelling and shrinking portions thereof will not be adjacent and alternately occur, thereby preventing ripples, deformations, breaks and cracks from occurring in the belt-shaped crystallized glass plate.

The holding temperature and time for the temperature-holding step are not specifically limited, and can be adequately selected to give a condition necessary for fully precipitating and growing crystals. Preferably, the holding temperature for the temperature-holding step may be set at or around the crystal-growth temperature used in conventional manufacturing methods of crystallized glass. Typically, the temperature may be within a range of 700-1200°C, preferably a range of 750-1100°C, more preferably a range of 800-1050°C, and is preferably retained at a nearly consistent value (variation below ±5 °C). The holding time for the temperature-holding step may be the time necessary for crystal growth in conventional manufacturing methods of crystallized glass. The crystallization is expected to be fully accomplished within the time range, typically being around 0.1-3 hours. For example, the nuclei formation may be facilitated by adding nucleus forming agents, such as TiO₂, ZrO₂, P₂O₅ and F₂, into a raw glass material in advance.

The slow-cooling step slowly cools the belt-shaped crystallized glass plate after crystallizing the belt-shaped glass plate to the belt-shaped crystallized glass plate, which is used to prevent the permanent deformation of the belt-shaped crystallized glass plate while generating homogeneous glass. In the present invention, slow-cooling means to cool down at a cooling rate sufficient to eliminate deformation. Obviously, the slower the cooling rate is, the less the permanent deformations are. In the present invention, since the thermal treatment time necessary for crystallizing the belt-shaped glass plate may be shortened, the time spent on the slow-cooling step may be increased without prolonging the overall treatment time necessary for the crystallizing step. Therefore, the temperature gradient of the slow-cooling step could be reduced, or the temperature gradient may be divided into multiple stages. Accordingly, the present invention can more efficiently eliminate the deformation of the belt-shaped crystallized glass plate obtained from crystallization, and obtain crystallized glass with higher strength.

Preferably, a method of continuously forming crystallized glass according to the present invention further includes:
an adjusting step of adjusting the homogeneity, viscosity and liquid level of the molten glass obtained from the melting step; and
a devitrification-preventing step of preventing the molten glass subjected to the adjusting step from devitrifying.

Furthermore, if necessary, a grinding step of grinding a surface of the glass plate to adjust its thickness or to polish the surface, or a processing step of processing the glass plate into a predetermined size or shape may be applied on the belt-shaped crystallized glass plate obtained from completing all the abovementioned steps.

A method of continuously forming crystallized glass according to the present invention is compatible to the following apparatus of continuously forming crystallized glass according to the present invention.

### Apparatus of continuously forming crystallized glass

The second aspect of the present invention is to provide an apparatus of continuously forming crystallized glass, including:
a melting device used for melting a raw glass material;
a shaping device used for rolling the molten glass obtained from the melting device to form a belt-shaped glass plate;
a crystallization device used for crystallizing the belt-shaped glass plate, wherein the crystallization device comprising:
   a temperature-holding zone used for retaining the belt-shaped glass plate obtained from the shaping device at a temperature necessary for nuclei formation and crystal growth, thereby forming nuclei and crystallizing the belt-shaped glass plate to a belt-shaped crystallized glass plate; and
   a slow-cooling zone, configured in the rear of the temperature-holding zone, used for slowly cooling the belt-shaped crystallized glass plate; and
   a cutting device used for cutting the belt-shaped crystallized glass plate obtained from the crystallization device.

The apparatus of continuously forming crystallized glass according to the present invention may melt, shape, crystallize, anneal and finally cut the glass raw material in a continuous order by sequentially comprising the melting, shaping, crystallization and cutting devices.

The melting device melts a raw glass material. The melting device may be made of a furnace including a heating device sufficient for melting the raw glass material, and may be any one of conventional glass-melting furnaces. The melting device may include a mixing device for mixing the raw glass material in the front part of the heating device sufficient for melting the raw glass material. The shaping device rolls the molten glass into a belt-shaped glass plate. In the shaping device, the shape-rolling method is not specifically limited, for example, it may be a roller-shaping method using a pair of rollers to press the molten glass. The crystallization device crystallizes the belt-shaped glass plate to form the belt-shaped crystallized glass plate. The crystallization device includes the temperature-holding and slow-cooling zones which will be described in details below, and performs crystallization and annealing of the belt-shaped glass plate. The cutting device cuts the belt-shaped crystallized glass plate into a predetermined length. In the cutting device, the cutting method may be a conventional method, such as a cutting method using a diamond cutter or a water jet cutting method.

In an apparatus of continuously forming crystallized glass according to the present invention, the crystallization device includes the temperature-holding zone and the slow-cooling zone. The temperature-holding zone retains the ambient temperature therein within the temperature range enabling the nuclei formation and crystal growth (preferably, a nearly constant temperature). When the belt-shaped glass plate obtained from the shaping device passes through the temperature-holding zone, nuclei will be formed and crystals will grow. It is supposed that both of nuclei formation and crystal growth of the belt-shaped glass plate may occur simultaneously in the temperature-holding zone. The present invention may shorten the thermal treatment time necessary for crystallizing the belt-shaped glass plate by using the thermal treatment zone necessary for crystallization as the temperature-holding zone. Therefore, the temperature-holding zone of the present invention may be shorter than the thermal treatment zone necessary for crystallizing the belt-shaped glass plate in a conventional manufacturing method. Furthermore, since the thermal treatment zone necessary for crystallizing the belt-shaped glass plate may be shortened, the overall length of the apparatus of continuously forming crystallized glass may be reduced. Alternatively, the slow-cooling zone may be lengthened without increasing the overall length of the crystallization device. If the slow-cooling zone is extended, the temperature gradient of the slow-cooling step would be smaller, or the temperature gradient may be divided into multiple stages. Therefore, the present invention can more effectively eliminate the deformation of the belt-shaped crystallized glass plate, and obtain crystallized glass with higher strength. Moreover, the present invention may prevent ripples, deformations, breaks and cracks from occurring in the belt-shaped crystallized glass plate by using the thermal treatment zone necessary for crystallization as the temperature-holding zone.

The ambient temperature of the temperature-holding zone is not specifically limited, and can be adequately selected to give a temperature sufficient for fully precipitating and growing crystals. Preferably, the ambient temperature for the temperature-holding zone may be set at or around the crystal-growth temperature used in conventional manufacturing methods of crystallized glass. Typically, the temperature may be within a range of 700-1200°C, preferably a range of 750-1100°C, more preferably a range of 800-1050°C, and is preferably retained at a nearly consistent value (variation below ±5 °C).

The length of the temperature-holding zone and the conveying speed of the belt-shaped glass plate in the temperature-holding zone are not specifically limited, and an adequate condition may be selected to ensure enough time for full crystal precipitation and growth. The time range may be a time range necessary for crystal growth in conventional manufacturing methods of crystallized glass, typically being around 0.1-3 hours. Furthermore, the conveying speed of the belt-shaped glass plate in the temperature-holding zone may be adequately selected based on the throughput of the melting device and/or the shaping device. Therefore, when the conveying speed of the belt-shaped glass plate in the temperature-holding zone is too slow, the length of the temperature-holding zone may be shortened accordingly; while the conveying speed of the belt-shaped glass plate in the temperature-holding zone is too fast, the length of the temperature-holding zone may be extended accordingly.

The slow-cooling zone slowly cools the belt-shaped crystallized glass plate after the belt-shaped glass plate is crystallized to the belt-shaped crystallized glass plate, which is used to eliminate the permanent deformation of the belt-shaped crystallized glass plate while generating homogeneous glass. In the present invention, since the thermal treatment zone necessary for crystallizing the belt-shaped glass plate may be reduced, the length of the slow-cooling zone may be increased without extending the overall length of the crystallization device. Therefore, the temperature gradient of the slow-cooling zone could be reduced, or the temperature gradient may be divided into multiple stages. Thus, the present invention can more efficiently eliminate the deformation of the belt-shaped crystallized glass plate, and obtain crystallized glass with higher strength.

Preferably, an apparatus of continuously forming crystallized glass according to the present invention may further include:
an adjusting device, coupled to the melting device, used for adjusting the homogeneity, viscosity and liquid level of the molten glass obtained from the melting device; and
a devitrification-preventing device, coupled to the adjusting device, used for preventing the molten glass flowing out of the adjusting device from devitrifying.

The apparatus of continuously forming crystallized glass according to the present invention may homogenize the molten glass, control the viscosity of the molten glass, prevent the molten glass from devitrifying, and supply the molten glass at a predetermined rate to the shaping device by disposing the adjusting device and the devitrification-preventing device.

One preferable embodiment of the adjusting device may consist of a homogenizing device used for homogenizing the molten glass, a viscosity-controlling device used for controlling the viscosity of the molten glass, and a liquid-level-controlling device used for controlling the liquid level of the molten glass. The homogenizing device may be a device used for stirring the molten glass. The viscosity-controlling device may be a heating device used for heating the molten glass. The liquid-level-controlling device may be used to detect the liquid level of the molten glass supplied from the melting device to the adjusting device, feed back the signal corresponding to the change of liquid level into a raw glass material supply device used for supplying the raw glass material, and modify the supply amount of the raw material supplied to the melting device. Since the liquid level of the molten glass passing through the adjusting device may be measured and the supply amount of the raw material may be modified by the liquid-level-controlling device, the thickness of the belt-shaped glass plate obtained from the shaping device may be controlled at a predetermined value. Therefore, the manufacturing process of crystallized glass may be automated and mass-produced, while the stability of quality may be ensured and the management of procedures may be achieved easily.

The preferable embodiment of an apparatus of continuously forming crystallized glass according to the present invention may further include a pressing roller, between the shaping device and the crystallization device, used for pressing the belt-shaped glass plate obtained from the shaping device. The surface of the belt-shaped glass plate obtained from the shaping device is planarized by the pressing roller. By disposing the pressing roller, the belt-shaped glass plate obtained from the shaping device is planarized and then supplied to the crystallization device.

The apparatus of continuously forming crystallized glass according to the present invention may generate crystallized glass from a raw glass material by a continuous shaping process, thereby being a preferable apparatus of manufacturing crystallized glass, which may be widely applied in a substrate for high-tech products (such as a substrate for a color filter or an image sensor), a bracket used in calcining electronic parts, a panel of a electromagnetic cooking device, optical parts, a shelve used in an electronic microwave oven, a window glass for a fireproof door, a windshield for an oil furnace or a wood stove, and construction materials.

One embodiment of an apparatus of continuously forming crystallized glass according to the present invention is described below accompanying with drawings. However, the present invention is not limited to this embodiment.

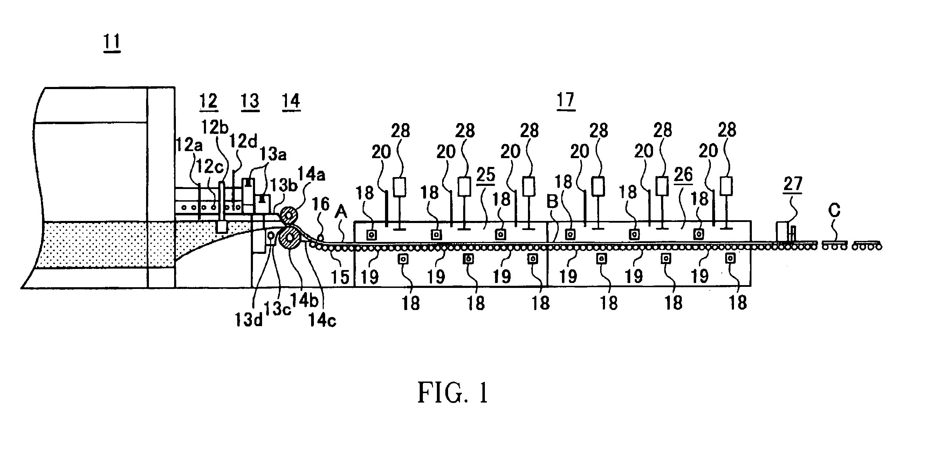

Fig. 1 shows an apparatus of continuously forming crystallized glass including a melting device 11, an adjusting device 12 (a front oven 12), an devitrification-preventing device 13, a roller-shaping device 14, a crystallization device 17 (a roller-hearth kiln 17), and a cutting device 27. The melting device 11 melts a raw glass material to molten glass, and includes an intermittent furnace capable of melting, clarifying and finally homogenizing the raw glass material, or a continuous furnace coupling the components respectively performing each function mentioned above.

The molten glass obtained from the melting device 11 is conveyed to the front oven 12 configured downstream from the conveying direction. The front oven 12 clarifies and homogenizes the molten glass, while adjusting the viscosity and liquid level of the molten glass. In the front oven 12, there are a liquid-level-controlling device 12a, a stirring device 12b, a heating device 12c and a thermocouple 12d. The liquid-level-controlling device 12a is used for detecting the liquid level of the molten glass, feeding back the signal corresponding to the change of liquid level into a raw glass material supply device (not shown) used for supplying the raw glass material to the melting device 11, and modifying the supply amount of the raw material. As mentioned above, the liquid level in the front oven 12 is adjusted to a predetermined value. The stirring device 12b is used for stirring and homogenizing the molten glass. The heating device 12c and the thermocouple 12d are used for adjusting the temperature of the molten glass, and adjusting the viscosity of the molten glass to a predetermined value.

The molten glass flowing out of the front oven 12 is supplied to the devitrification-preventing device 13 configured downstream from the conveying direction. In the devitrification-preventing device 13, there are a temperature-holding device 13a, an edge 13b, a brace 13c, and a heating device 13d. The temperature-holding device 13a is used for maintaining the molten glass at a predetermined temperature. The edge 13b is used for pushing the molten glass to the roller-shaping device 14. The brace 13c is a support for holding the edge 13b. The heating device 13d is configured through the brace 13c, and the brace 13c and the edge 13b may be heated by the heating device 13d. The devitrification-preventing device 13 may retain the molten glass to be supplied to the roller-shaping device 14 at a predetermined temperature by keeping the molten glass warm via the temperature-holding device 13a and by heating the molten glass via the heating device 13d, so as to prevent the molten glass from devitrifying.

The molten glass flowing through the devitrification-preventing device 13 from the front oven 12 is supplied to the roller-shaping device 14 configured downstream from the conveying direction. The roller-shaping device 14 is used for rolling the molten glass into a belt-shaped glass plate. In the roller-shaping device 14, there are a top roller 14a, a bottom roller 14b, and a cooling water tank 14c. The top roller 14a and the bottom roller 14b are commercially available, and made of materials with high hot strength and excellent resistances to heat, heat shock and heat cracking. The top roller 14a and the bottom roller 14b are configured oppositely, and used for rolling the molten glass supplied in-between the pair of the rollers into a belt shape. The cooling water tank 14c is used for continuously supplying water to cool down the molten glass therein, and cooling the rolled belt-shaped glass while maintaining the belt shape.

The belt-shaped glass formed by the roller-shaping device 14 is conveyed by a conveying device 15 configured downstream from the conveying direction. The conveying device 15 consists of a mechanism capable of conveying the belt-shaped glass plate, such as a number of rollers or a heatproof conveyer, so as to convey the rolled belt-shaped glass plate. A pressing roller 16 is provided above the upstream part of the conveying device 15, and the pressing roller 16 is used for pressing the belt-shaped glass plate formed by the roller-shaping device 14. The pressing roller 16 is made of the steel with good heat resistance, and consists of one to several rollers. The flat belt-shaped glass plate A is formed by pressing the belt-shaped glass (formed by the roller-shaping device 14) with the pressing roller 16. Furthermore, based on the surface characters of the belt-shaped glass plate formed by the roller-shaping device 14, the pressing roller 16 is not necessary and may be omitted.

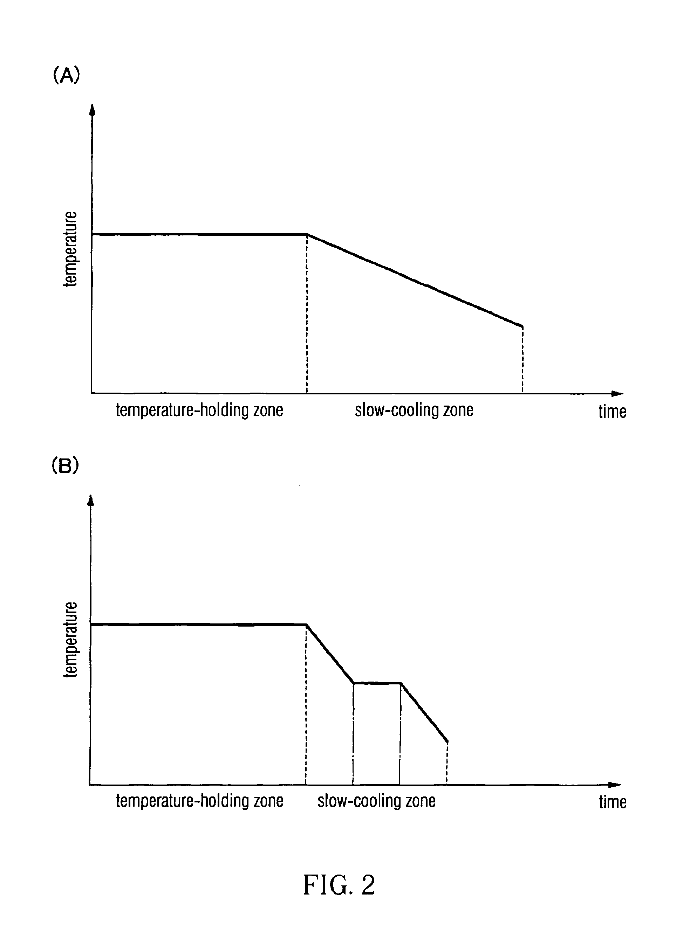

The belt-shaped glass plate A is conveyed by the conveying device 15, and supplied to the crystallization device 17. The crystallization device 17 consists of a temperature-holding zone used for retaining the belt-shaped glass plate A at a temperature necessary for nuclei formation and crystal growth, thereby forming nuclei and crystallizing the belt-shaped glass plate A to the belt-shaped crystallized glass plate B; and a slow-cooling zone 26, configured in the rear of the temperature-holding zone 25, used for slowly cooling the belt-shaped crystallized glass plate B, so as to obtain the belt-shaped crystallized glass plate B from the belt-shaped glass plate A. The temperature-holding zone 25 and the slow-cooling zone 26 control the ambient temperature in their individual zone, so that a heating curve shown in Figs. 2A or 2B may be obtained. The heating curve shown in Fig. 2A is in the case of setting the temperature gradient of the slow-cooling zone as a low-gradient. The heating curve shown in Fig. 2B is in the case of setting the temperature gradient of the slow-cooling zone as a multiple staged gradient including a pattern from fast-cooling stage, temperature-holding stage to fast-cooling stage.

The crystallization device 17 is a commercially available roller-hearth kiln, and is provided with a heating device 18, a conveying roller 19, a thermocouple 20, and a stirring device 28. One or more heating devices 18 are configured on the sidewalls of the kiln above and beneath the conveying roller 19 in the temperature-holding zone 25 and the slow-cooling zone 26; and the thermocouple 20 is configured above each heating device 18, so as to control the temperature with a variation below ±5°C. The stirring device 28 is used for stirring air inside each zone, and homogenizing the temperature in each zone. The thermal treatment for crystallization can be thoroughly performed, and the crystallization of the rolled belt-shaped glass plate can be easily and thoroughly achieved by the said devices. Furthermore, the heating source may be adequately selected based on the temperature required, such as a SiC heating device, an molybdenum disilicide heater, fuel gas, and electricity. The conveying roller 19 is made of heatproof rollers, and used for nonstop and continuously conveying the belt-shaped glass plate within the crystallization device 17.

The belt-shaped glass plate A formed by the roller-shaping device 14 is promptly, directly and continuously conveyed to the temperature-holding zone 25 in the crystallization device 17. The temperature-holding zone 25 retains the belt-shaped glass plate A at a temperature necessary for nuclei formation and crystal growth, thereby forming nuclei and crystallizing the belt-shaped glass plate A to a belt-shaped crystallized glass plate B, and provides a predetermined temperature range enabling the belt-shaped glass plate A to form nuclei and grow crystals inside the zone.

The slow-cooling zone 26 slowly cools the belt-shaped crystallized glass plate B so as to eliminate the permanent deformation of the belt-shaped crystallized glass plate B and form homogeneous glass. The slow-cooling zone 26 provides a predetermined temperature gradient shown in Figs. 2A or 2B, and the temperature inside is slowly cooled along the direction of conveying the belt-shaped crystallized glass plate B to the exit of the crystallization device 17.

The belt-shaped crystallized glass plate B, obtained from crystallizing the belt-shaped glass plate A by the crystallization device 17, is conveyed to the cutting device 27 configured downstream from the conveying direction. The cutting device 27 is used for cutting the belt-shaped crystallized glass plate B into a predetermined size. The crystallized glass plate C obtained from the cutting device 27 is conveyed to a secondary processing factory, and then made into a final product by a secondary process.

### Embodiments

The following embodiments are provided to further clarify the present invention, rather than to limit the scopes of the present invention.

### Example 1

A raw glass material consisting of, by mass percent, SiO₂ 63.5%, Al₂O₃ 21.5%, MgO 0.5%, ZnO 1.5%, BaO 1.8%, TiO₂ 2.8%, ZrO₂ 1.5%, B₂O₃ 0.3%, P₂O₅ 1.0%, Na₂O 0.7%, K₂O 0.5%, Li₂O 3.6%, As₂O₃ 0.5%, and V₂O₅ 0.3%, was added into a crucible. The raw glass material was melted at 1670°C, and shape-rolled into a plate sized 20cmx20cmx4mm. The glass plate was placed in a thermal treatment furnace, in which the temperature was retained at 880°C for 30 minutes, and then cooled at a rate of 10°C/min. As a result, β-quarts solid solution precipitated as main crystals to give a black crystallized glass plate. No ripples, deformations, breaks and cracks were observed in the crystallized glass plate, and the appearance of the crystallized glass plate was smooth and fine.

### Example 2

A raw glass material consisting of, by mass percent, SiO₂ 64.0%, Al₂O₃ 22.0%, MgO 0.5%, ZnO 1.0%, BaO 2.0%, TiO₂ 2.5%, ZrO₂ 1.5%, B₂O₃ 0.3%, P₂O₅ 0.8%, Na₂O 0.8%, K₂O 0.3%, Li₂O 3.8%, and As₂O₃ 0.5%, was added into a crucible. The raw glass material was melted at 1650°C, and shape-rolled into a plate sized 20cmx20cmx4mm. The glass plate was placed in a thermal treatment furnace, in which the temperature was retained at 1000°C for 30 minutes, and then cooled at a rate of 10°C/min. As a result, β-spodumene precipitated as main crystals to give a white crystallized glass plate. No ripples, deformations, breaks and cracks were observed in the crystallized glass plate, and the appearance of the crystallized glass plate was smooth and fine.

### Reference example 1

A raw glass material consisting of, by mass percent, SiO₂ 63.5%, Al₂O₃ 21.5%, MgO 0.5%, ZnO 1.5%, BaO 1.8%, TiO₂ 2.8%, ZrO₂ 1.5%, B₂O₃ 0.3%, P₂O₅ 1.0%, Na₂O 0.7%, K₂O 0.5%, Li₂O 3.6%, As₂O₃ 0.5%, and V₂O₅ 0.3%, was added into a crucible. The raw glass material was melted at 1670°C, and shape-rolled into a plate sized 20cmx20cmx4mm. After cooling down to around the glass transition temperature, the glass plate was placed in a thermal treatment furnace, in which the temperature was retained at 600°C for 10 minutes, then increased to 730°C at a rate of 10°C/min, retained at 730°C for 20 minutes, increased to 880°C at a rate of 10°C/min, retained at 880°C for 30 minutes, and then cooled at a rate of 10°C/min. As a result, β-quartz solid solution precipitated as main crystals to give a black crystallized glass plate. No ripples, deformations, breaks and cracks were observed in the crystallized glass plate, and the appearance of the crystallized glass plate was smooth and fine.

## Claims

1. A method of continuously forming crystallized glass comprising:
a melting step of melting a raw glass material to obtain molten glass;
a shaping step of rolling the molten glass to form a belt-shaped glass plate;
a crystallizing step of retaining the belt-shaped glass plate at a temperature necessary for nuclei formation and crystal growth, thereby forming nuclei and crystallizing the belt-shaped glass plate to a belt-shaped crystallized glass plate, and then slowly cooling the belt-shaped crystallized glass plate; and
a cutting step of cutting the belt-shaped crystallized glass plate.

2. The method of claim 1 further comprising:
an adjusting step of adjusting the homogeneity, viscosity and liquid level of the molten glass obtained from the melting step; and
an devitrification-preventing step of preventing the molten glass subjected to the adjusting step from devitrifying.

3. A apparatus of continuously forming crystallized glass comprising:
a melting device used for melting a raw glass material;
a shaping device used for rolling molten glass obtained from the melting device to form a belt-shaped glass plate;
a crystallization device used for crystallizing the belt-shaped glass plate, wherein the crystallization device comprising:
a temperature-holding zone used for retaining the belt-shaped glass plate obtained from the shaping device at a temperature necessary for nuclei formation and crystal growth, thereby forming nuclei and crystallizing the belt-shaped glass plate to a belt-shaped crystallized glass plate; and
a slow-cooling zone configured in the rear of the temperature-holding zone and
used for slowly cooling the belt-shaped crystallized glass plate; and
a cutting device used for cutting the belt-shaped crystallized glass plate obtained from the crystallization device.

4. The apparatus of claim 3 further comprising:
an adjusting device coupled to the melting device and used for adjusting the homogeneity, viscosity and liquid level of the molten glass obtained from the melting device; and
a devitrification-preventing device coupled to the adjusting device and used for preventing the molten glass flowing out of the adjusting device from devitrifying.
